# EUROPEAN PATENT APPLICATION

(11) **EP 4 411 948 A1**
(43) Date of publication of application: **07.08.2024**
(21) Application number: 23217091.0
(22) Date of filing: 15.12.2023
(51) Int. Cl.: H01M 50/209, H01M 50/242, H01M 50/291, H01M 50/293, H01M 10/647, H01M 10/653, H01M 10/658

(54) **BATTERY PACK**

(30) Priority: 31.01.2023 JP 2023012960
(71) Applicant: Prime Planet Energy & Solutions, Inc., Chuo-ku Tokyo 103-0022 (JP)
(72) Inventor: IWATA, Ryosuke, Tokyo, 103-0022 (JP); MATSUTA, Shigeki, Tokyo, 103-0022 (JP); OMURA, Tetsuji, Tokyo, 103-0022 (JP)
(74) Representative: Kuhnen & Wacker Patent- und Rechtsanwaltsbüro PartG mbB

(57) **Abstract**

A battery pack (500) disclosed herein includes a plurality of rectangular secondary batteries (100) that are disposed along an arrangement direction (X), and a spacer (200) that is disposed between the rectangular secondary batteries (100) that are adjacent in the arrangement direction (X). The spacer (200) includes a first part (210) and a second part (220), the first part (210) has an elastic modulus of 1 MPa or more and 10 MPa or less, the second part (220) includes a porous part (222), and 50 mass% or more of the entire porous part (222) is occupied by a material that satisfies both the following conditions: (1) a classification of heat resistance based on JIS K 6380 (2014) is E or more; and (2) the elastic modulus in the arrangement direction (X) is 0.02 MPa or more and 0.9 MPa or less.

## Description

### BACKGROUND OF THE DISCLOSURE

### 1. Field

The present disclosure relates to a battery pack.

### 2. Background

In power sources for vehicle driving or the like, battery packs in which a plurality of secondary batteries (cells) are electrically connected to each other for higher output have widely been used conventionally. Conventional technical literatures related to the battery pack include Japanese Patent No. 6913872 and WO 2019/146438.

For example, Japanese Patent No. 6913872 discloses a battery pack including a plurality of secondary batteries that are disposed along a predetermined arrangement direction, a spacer that is disposed between the secondary batteries that are adjacent in the arrangement direction, and a heat conduction suppressing member that is disposed between the secondary battery and the spacer and suppresses heat conduction between the secondary batteries. In Japanese Patent No. 6913872, the heat conduction suppressing member includes a heat insulation member with a structure in which a porous material such as silica xerogel is held between fibers of a fiber sheet made of nonwoven fabric or the like, so that the structure can be kept stably even when pressure is applied from the outside (for example, when fastened by a restriction mechanism).

### SUMMARY

In recent years, a secondary battery mounted on a vehicle or the like has come to have higher capacity. According to the present inventors' examination, in a case of applying the aforementioned technique to a battery pack including a secondary battery with higher capacity, there is still room for improvement. That is to say, the secondary battery with the higher capacity contains a larger amount of active material in a battery case, so that swelling occurs easily along with a charging and discharging cycle. At this time, using the heat conduction suppressing member that can stably keep the structure as described in Japanese Patent No. 6913872 (in other words, with a high elastic modulus) makes it difficult to absorb the swelling of the secondary battery. As a result, the swelling of the entire battery pack or deterioration in performance of the secondary battery may be caused. In addition, the secondary battery with the higher capacity easily generates heat at charging and discharging and at short-circuiting. Therefore, even if the secondary battery generates heat, the heat conduction to the adjacent secondary battery needs to be suppressed at a high level.

The present disclosure has been made in view of the above circumstances, and its main object is to provide a battery pack including a spacer with excellent heat resistance that can absorb swelling of a secondary battery.

A battery pack according to the present disclosure includes a plurality of rectangular secondary batteries that are disposed along a predetermined arrangement direction, and a spacer that is disposed between the rectangular secondary batteries that are adjacent in the arrangement direction. The spacer includes a first part and a second part that are stacked in the arrangement direction, the first part has an elastic modulus of 1 MPa or more and 10 MPa or less, the second part includes a porous part, 50 mass% or more of the entire porous part is occupied by a material that satisfies both the following conditions: (1) a classification of heat resistance based on JIS K 6380 (2014) of Japanese Industrial Standards is E or more; and (2) the elastic modulus is 0.02 MPa or more and 0.9 MPa or less, and the elastic modulus is a value obtained as an inclination of an approximation line in a range of a compression ratio from 1 to 20% from a compression load-compression ratio curve (horizontal axis: compression ratio, vertical axis: compression load) formed by performing compression until a compression load becomes 3.9 MPa in the arrangement direction at a compression speed of 12 kPa/min.

Since the spacer includes the first part satisfying the aforementioned elastic modulus and the second part including the porous part in the present disclosure, even when the secondary battery expands and shrinks at charging and discharging, a load can be stably applied to the secondary battery. Additionally, since the second part includes the porous part mainly including the material that satisfies both the aforementioned classification of the heat resistance and the aforementioned elastic modulus, the spacer can have both the heat resistance and a swelling absorptive property. Specifically, compared to a case in which the second part does not include the porous part or a case in which the porous part does not satisfy the aforementioned classification of the heat resistance, the heat conduction to the adjacent secondary battery can be suppressed relatively. Furthermore, each of the first part satisfying the aforementioned elastic modulus and the second part including the porous part can absorb the swelling of the secondary battery; therefore, as compared to a case in which, for example, the second part does not satisfy the aforementioned elastic modulus, the swelling absorptive property can be improved relatively, and accordingly, the deterioration in performance of the secondary battery after the charging and discharging cycle can be suppressed.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating a battery pack according to an embodiment;
FIG. 2 is a perspective view schematically illustrating a secondary battery in FIG. 1;
FIG. 3 is a schematic longitudinal cross-sectional view taken along line III-III in FIG. 2;
FIG. 4 is a perspective view schematically illustrating a spacer in FIG. 1;
FIG. 5 expresses a schematic FS curve;
FIG. 6A and FIG. 6B are schematic views of a first part according to a first embodiment, in which FIG. 6A is a plan view of a surface orthogonal to a thickness direction and FIG. 6B is a longitudinal cross-sectional view taken along line VIB-VIB in FIG. 6A;
FIG. 7 is a table expressing a classification of heat resistance; and
FIG. 8A and FIG. 8B are schematic views of a first part according to a second embodiment, in which FIG. 8A is a plan view of a surface orthogonal to the thickness direction and FIG. 8B is a longitudinal cross-sectional view taken along line VIIIB- VIIIB in FIG. 8A.

### DETAILED DESCRIPTION OF THE PREFERRED EMBODIMENTS

Preferred embodiments of a battery pack disclosed herein will be described below with reference to the drawings as appropriate. Matters other than matters particularly mentioned in the present specification and necessary for the implementation of the present disclosure (for example, the general configuration and manufacturing process of a battery pack or a rectangular secondary battery that do not characterize the present disclosure) can be grasped as design matters of those skilled in the art based on the prior art in the relevant field. The battery pack disclosed herein can be implemented on the basis of the disclosure of the present specification and common technical knowledge in the relevant field.

Note that in the drawings below, the members and parts with the same operation are denoted by the same reference sign and the overlapping description may be omitted or simplified. Moreover, in the present specification, the notation "A to B" for a range signifies a value more than or equal to A and less than or equal to B, and is meant to encompass also the meaning of being "preferably more than A" and "preferably less than B".

### <First embodiment>

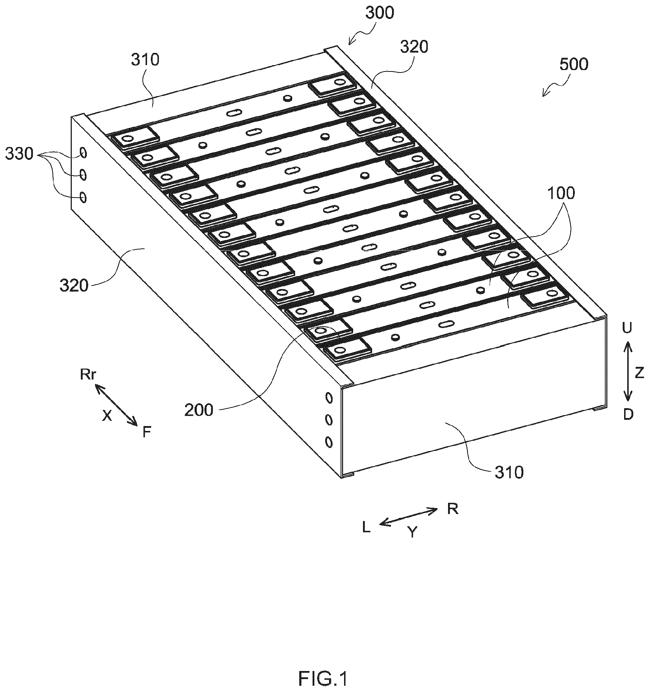

FIG. 1 is a perspective view schematically illustrating a battery pack 500 according to an embodiment. The battery pack 500 includes a plurality of rectangular secondary batteries 100 that are disposed along an arrangement direction X and a plurality of spacers 200 that are disposed between the rectangular secondary batteries 100 that are adjacent in the arrangement direction X. In this case, the battery pack 500 further includes a restriction mechanism 300. In the following description, reference signs L, R, F, Rr, U, and D in the drawings respectively denote left, right, front, rear, up, and down, and reference signs X, Y, and Z in the drawings respectively denote a thickness direction of the rectangular secondary battery 100, a long side direction that is orthogonal to the thickness direction, and an up-down direction that is orthogonal to the thickness direction and the long side direction. The thickness direction X also corresponds to the arrangement direction of the rectangular secondary batteries 100. These directions are defined however for convenience of explanation, and do not limit the manner in which the battery pack 500 is disposed.

The restriction mechanism 300 is configured to apply prescribed restriction pressure on the plurality of rectangular secondary batteries 100 and the plurality of spacers 200 from the arrangement direction X. The restriction mechanism 300 here includes a pair of end plates 310, a pair of side plates 320, and a plurality of screws 330. The pair of end plates 310 are disposed at both ends of the plurality of rectangular secondary batteries 100 in the arrangement direction X. The pair of end plates 310 hold the plurality of rectangular secondary batteries 100 and the plurality of spacers 200 therebetween in the arrangement direction X. The pair of end plates 310 are preferably made of metal. However, a part thereof may be made of resin.

The pair of side plates 320 bridge over the pair of end plates 310. The pair of side plates 320 are preferably made of metal. However, a part thereof may be made of resin. The pair of side plates 320 are fixed to the end plates 310 by the plurality of screws 330 so that a restriction load is generally about 10 to 15 kN, for example. Thus, the restriction load is applied on the plurality of rectangular secondary batteries 100 and the plurality of spacers 200 from the arrangement direction X and accordingly, the battery pack 500 is held integrally. The structure of the restriction mechanism is, however, not limited to this example. In another example, the restriction mechanism 300 may alternatively include a plurality of restriction bands, bind bars, or the like instead of the side plates 320.

The plurality of rectangular secondary batteries 100 are arranged along the arrangement direction X (in other words, the thickness direction X of the rectangular secondary battery 100) between the pair of end plates 310. The plurality of rectangular secondary batteries 100 are preferably restricted by the restriction mechanism 300. Although not illustrated in FIG. 1, when the battery pack 500 is used, the plurality of rectangular secondary batteries 100 are electrically connected to each other by a conductive member such as a busbar. The connection method is not limited in particular and may be, for example, series connection, parallel connection, multiple series-multiple parallel connection, or the like.

The rectangular secondary battery 100 is a battery that is capable of being charged and discharged repeatedly. Note that in the present specification, the term "secondary battery" refers to general power storage devices that are capable of being charged and discharged repeatedly, and corresponds to a concept encompassing, in addition to so-called storage batteries such as lithium ion secondary batteries and nickel-hydrogen batteries, capacitors such as lithium ion capacitors and electrical double-layer capacitors. The shape, the size, the number, the arrangement, and the like of the rectangular secondary batteries 100 included in the battery pack 500 are not limited to the aspect disclosed herein, and can be changed as appropriate.

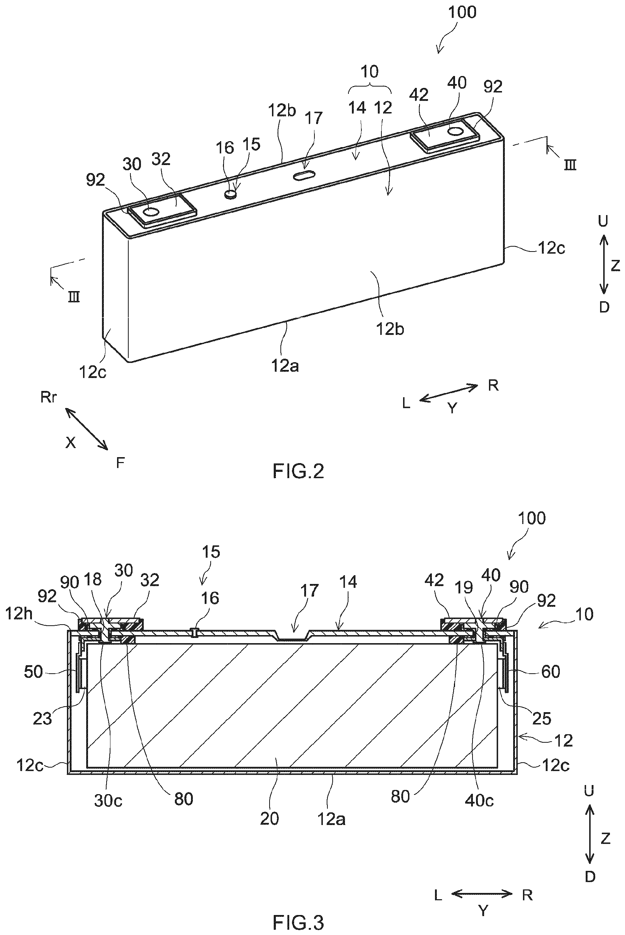

FIG. 2 is a perspective view of the rectangular secondary battery 100. FIG. 3 is a schematic longitudinal cross-sectional view taken along line III-III in FIG. 2. As illustrated in FIG. 3, the rectangular secondary battery 100 includes a battery case 10, an electrode body 20, a positive electrode terminal 30, a negative electrode terminal 40, a positive electrode current collecting member 50, a negative electrode current collecting member 60, and a nonaqueous electrolyte solution (not shown). The nonaqueous electrolyte solution may be similar to the conventional nonaqueous electrolyte solution, without particular limitations. The rectangular secondary battery 100 is a lithium ion secondary battery here.

The battery case 10 is a housing that accommodates the electrode body 20 and the nonaqueous electrolyte solution. As illustrated in FIG. 2, the external shape of the battery case 10 is a flat and bottomed cuboid shape (rectangular shape). A conventionally used material can be used for the battery case 10, without particular limitations. The battery case 10 is preferably made of metal, and for example, more preferably made of aluminum, an aluminum alloy, iron, an iron alloy, or the like. The battery case 10 includes an exterior body 12 and a sealing plate (lid body) 14. The battery case 10 preferably includes the exterior body 12 and the sealing plate 14 as described in the present embodiment.

As illustrated in FIG. 2, the exterior body 12 includes a bottom wall 12a with a substantially rectangular shape, a pair of long side walls 12b extending from long sides of the bottom wall 12a and facing each other, a pair of short side walls 12c extending from short sides of the bottom wall 12a and facing each other, and an opening 12h (see FIG. 3) facing the bottom wall 12a. The long side wall 12b is a surface that faces the spacer 200. The long side wall 12b is larger in area than the short side wall 12c. The sealing plate 14 is a plate-shaped member that seals the opening 12h of the exterior body 12. As illustrated in FIG. 3, the sealing plate 14 is attached to the exterior body 12 so as to cover the opening 12h. The sealing plate 14 faces the bottom wall 12a of the exterior body 12. The sealing plate 14 is substantially rectangular in shape. The battery case 10 is unified in a manner that the sealing plate 14 is joined (preferably, joined by welding) to a periphery of the opening 12h of the exterior body 12. The battery case 10 is hermetically sealed (closed).

Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

As illustrated in FIG. 3, a liquid injection hole 15, a discharge valve 17, and two terminal extraction holes 18 and 19 are provided in the sealing plate 14. The sealing plate 14 is preferably provided with the liquid injection hole 15 and the discharge valve 17. The liquid injection hole 15 is provided for the purpose of injecting the nonaqueous electrolyte solution after the sealing plate 14 is assembled to the exterior body 12. The liquid injection hole 15 is sealed by a sealing member 16. The discharge valve 17 is configured to break when the pressure in the battery case 10 becomes more than or equal to a predetermined value so as to discharge the gas out of the battery case 10. The terminal extraction holes 18 and 19 penetrate the sealing plate 14 in the up-down direction Z. The terminal extraction holes 18 and 19 each have the inner diameter that enables the positive electrode terminal 30 and the negative electrode terminal 40, which have not been attached to the sealing plate 14 yet (before a caulking process), to pass therethrough.

The positive electrode terminal 30 is disposed at an end part of the sealing plate 14 on one side in the long side direction Y (left end part in FIG. 2 and FIG. 3). The negative electrode terminal 40 is disposed at an end part of the sealing plate 14 on the other side in the long side direction Y (right end part in FIG. 2 and FIG. 3). The positive electrode terminal 30 and the negative electrode terminal 40 are preferably attached to the sealing plate 14. As illustrated in FIG. 3, the positive electrode terminal 30 and the negative electrode terminal 40 extend from the inside to the outside of the sealing plate 14 through the terminal extraction holes 18 and 19. The positive electrode terminal 30 and the negative electrode terminal 40 are here caulked to a peripheral part of the sealing plate 14 that surrounds the terminal extraction holes 18 and 19 by the caulking process. Caulking parts 30c and 40c are formed at an end part of the positive electrode terminal 30 and the negative electrode terminal 40 on the exterior body 12 side (lower end part in FIG. 3).

As illustrated in FIG. 3, the positive electrode terminal 30 is electrically connected to a positive electrode current collecting part 23 of the electrode body 20 through the positive electrode current collecting member 50 inside the exterior body 12. The negative electrode terminal 40 is electrically connected to a negative electrode current collecting part 25 of the electrode body 20 through the negative electrode current collecting member 60 inside the exterior body 12. The positive electrode terminal 30 is insulated from the sealing plate 14 by an internal insulation member 80 and a gasket 90. The negative electrode terminal 40 is insulated from the sealing plate 14 by the internal insulation member 80 and the gasket 90.

As illustrated in FIG. 2 and FIG. 3, a positive electrode external conductive member 32 and a negative electrode external conductive member 42, each having a plate shape, are attached to an external surface of the sealing plate 14. The positive electrode external conductive member 32 is electrically connected to the positive electrode terminal 30. The negative electrode external conductive member 42 is electrically connected to the negative electrode terminal 40. The positive electrode external conductive member 32 and the negative electrode external conductive member 42 are members to which the conductive member such as a busbar that electrically connects the plurality of rectangular secondary batteries 100 to each other is attached. The positive electrode external conductive member 32 and the negative electrode external conductive member 42 are insulated from the sealing plate 14 by an external insulation member 92. For example, in the adj acent rectangular secondary batteries 100, the positive electrode external conductive member 32 of one rectangular secondary battery 100 and the negative electrode external conductive member 42 of the other rectangular secondary battery 100 are electrically connected to each other by the busbar or the like so as to be connected in series in the battery pack 500.

The electrode body 20 includes a positive electrode and a negative electrode. The structure of the electrode body 20 may be similar to the conventional structure thereof, without particular limitations. The number of electrode bodies 20 to be disposed in one exterior body 12 is not limited in particular and may be plural. The electrode body 20 here is a wound electrode body with a flat shape in which the positive electrode with a band shape and the negative electrode with a band shape are stacked via a separator in an insulated state and wound using a winding axis as a center. In another embodiment, the electrode body 20 may be a stack type electrode body formed in a manner that a plurality of square positive electrodes and a plurality of square negative electrodes are stacked in the insulated state.

As illustrated in FIG. 3, the positive electrode current collecting part 23 is provided at one end part of the electrode body 20 in a winding axis direction (the long side direction Y in FIG. 3). The negative electrode current collecting part 25 is provided at the other end part. The positive electrode current collecting member 50 is attached to the positive electrode current collecting part 23. The negative electrode current collecting member 60 is attached to the negative electrode current collecting part 25. The positive electrode current collecting member 50 constitutes a conductive path that electrically connects the positive electrode terminal 30 and the positive electrode of the electrode body 20. The negative electrode current collecting member 60 constitutes a conductive path that electrically connects the negative electrode terminal 40 and the negative electrode of the electrode body 20.

The spacers 200 are each disposed between the plurality of rectangular secondary batteries 100 in the arrangement direction X here. That is to say, in the arrangement direction X, the rectangular secondary batteries 100 and the spacers 200 are arranged alternately. Note that it is only necessary that the spacer 200 is disposed between at least two rectangular secondary batteries 100 that are adjacent in the arrangement direction X, and it is not always necessary that the spacer 200 is disposed between all the rectangular secondary batteries 100. Here, each of a pair of surfaces of the spacer 200 that are orthogonal to the arrangement direction X (both surfaces in the arrangement direction X) is in contact (direct contact) with the long side wall 12b of the rectangular secondary battery 100. Between the rectangular secondary battery 100 and the spacer 200, however, a different member can exist.

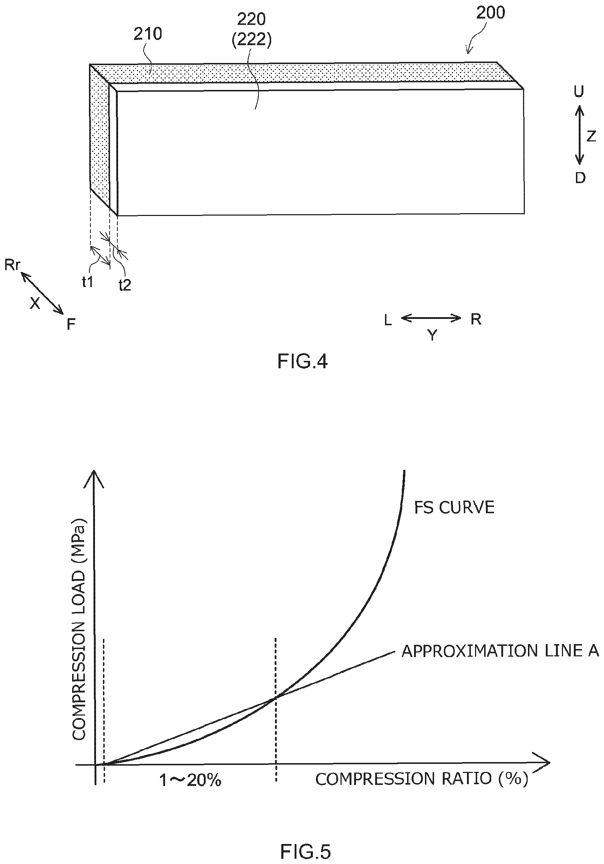

FIG. 4 is a perspective view schematically illustrating the spacer 200. As illustrated in FIG. 4, the spacer 200 includes a first part 210 and a second part 220. The outer shape of each of the first part 210 and the second part 220 in FIG. 4 is a flat plate shape. The first part 210 and the second part 220 are stacked in the arrangement direction X. The spacer 200 has a two-layer structure including one first part 210 and one second part 220 here. In this case, the first part 210 includes a pair of surfaces (Y-Z planes in FIG. 4) orthogonal to the thickness direction X, one of which faces (here, is in contact with) the second part 220 and the other of which faces (here, is in contact with) the long side wall 12b of the battery case 10. Here, the second part 220 includes a pair of surfaces (Y-Z planes in FIG. 4) orthogonal to the thickness direction X, one of which faces (here, is in contact with) the first part 210 and the other of which faces (here, is in contact with) the long side wall 12b of the battery case 10.

The first part 210 and the second part 220 are preferably integrated, and particularly preferably integrated with a binding member. Thus, a deviation in stacking between the first part 210 and the second part 220 can be prevented. Additionally, the productivity and workability of the battery pack 500 can be improved. In the present specification, the term "integrating" refers to a concept encompassing detachable fixing using a binding member, undetachable attachment, engagement without the use of a binding member (mechanical joining), integral molding, and the like. The first part 210 and the second part 220 may be, for example, fixed with a tape or the like as the binding member, covered entirely and wrapped with a resin sheet, a laminate film, or the like as the binding member, attached to each other chemically or physically through an adhesive or an adhesive layer (double-sided tape or the like) as the binding member, or processed as one member by engagement or integral molding without the use of the binding member.

As illustrated in FIG. 4, the first part 210 and the second part 220 have approximately the same area of the Y-Z plane (machining error is allowed). In the first part 210 and the second part 220, the area of the Y-Z plane is preferably 50% or more, more preferably 70% or more, and particularly preferably 80% or more of the area of the long side wall 12b of the battery case 10 (surface facing the spacer 200). Thus, the effect of the art disclosed herein can be achieved at a high level.

As illustrated in FIG. 4, a thickness t1 of the first part 210 is preferably 5% or more, for example 5 to 15% of the thickness of the rectangular secondary battery 100 (length in thickness direction X) in a state before the spacer 200 is assembled to the battery pack 500 and compressed. A thickness t2 of the second part 220 is preferably 2% or more, for example 2 to 20%, and more preferably 5% or more, for example 5 to 15% of the thickness of the rectangular secondary battery 100 (length in thickness direction X) in the state before the spacer 200 is assembled to the battery pack 500 and compressed. The total of the thickness t1 and the thickness t2 is preferably 7% or more, for example 7 to 35%, and more preferably 10% or more, for example 10 to 30% of the thickness of the rectangular secondary battery 100 (length in thickness direction X).

However, the shape, the size, the arrangement, and the like of the first part 210 and the second part 220 can be determined as appropriate in accordance with the shape, the size, the capacity (degree of expansion and shrinkage) of the rectangular secondary battery 100, for example. For example, the spacer 200 may have a three-layer structure (second part 220/first part 210/second part 220) where the second part 220 is disposed on both side surfaces of the first part 210 in the arrangement direction X, or on the contrary, a three-layer structure (first part 210/second part 220/first part 210) where the first part 210 is disposed on both side surfaces of the second part 220 in the arrangement direction X. The spacer 200 may have a structure with four or more layers or may include a part other than the first part 210 and the second part 220.

The first part 210 is configured to have an elastic modulus satisfying a predetermined range to be described below and be elastically deformable in the arrangement direction X. Therefore, when the rectangular secondary battery 100 expands at the charging or the like and the load applied to the first part 210 increases, the first part 210 is compressed. On the other hand, when the rectangular secondary battery 100 shrinks at the discharging or the like and the load applied to the first part 210 decreases, the first part 210 is restored to the original shape. Therefore, even when the rectangular secondary battery 100 expands and shrinks at the charging and discharging, the rectangular secondary battery 100 can be stably pressed with a predetermined restriction load and the load necessary to maintain the performance can be stably applied by the provision of the first part 210 in the spacer 200. Moreover, when the rectangular secondary battery 100 swells after a charging and discharging cycle, the swelling can be suitably absorbed, and a swelling absorptive property of the spacer 200 can be increased more by a multiplier effect with the second part 220 to be described below.

In the present embodiment, the first part 210 has an elastic modulus of 1 MPa to 10 MPa. As the numeral of the elastic modulus is smaller, the hardness is lower and the elastic deformation in the thickness direction X (arrangement direction X) occurs more easily. The first part 210 has an elastic modulus of preferably 7 MPa or less and more preferably 5 MPa or less, and the elastic modulus may be 3.3 MPa or less, for example. When the elastic modulus of the first part 210 is a predetermined value or less, the spacer 200 is crushed easily in the case where the rectangular secondary battery 100 is charged or the rectangular secondary battery 100 swells. Moreover, the swelling of the rectangular secondary battery 100 can be absorbed easily. The first part 210 may have an elastic modulus of 1.5 MPa or more, or 3.0 MPa or more. When the elastic modulus of the first part 210 is a predetermined value or more, in the case where the rectangular secondary battery 100 is discharged, the spacer 200 is restored to the original shape easily. Moreover, in the case where the rectangular secondary battery 100 swells, the spacer 200 resists to suppress the swelling easily. The elastic modulus of the first part 210 can be adjusted by, for example, a material, a structure (for example, the number, the size, the shape, and the arrangement of protrusion parts 213 and an area S of a contact region CA), and the like as described below.

In the present specification, the term "elastic modulus" refers to the value obtained as follows. That is, first, a test piece in which each of a pair of surfaces orthogonal to the thickness direction X has a square shape of 5 cm × 5 cm is prepared and the initial thickness (mm) is measured with a micrometer. Next, using a conventionally known compression testing device, the test piece is compressed with a constant speed in the thickness direction X until the compression load on the test piece per unit area becomes 3.9 MPa under a condition of a compression speed of 30 N/min (12 kPa/min); thus, the compression load (MPa) and the thickness after the compression (mm) are measured. Next, from the compression load (MPa) and the thickness after the compression (mm), a compression load-compression ratio curve (FS curve) is formed, in which the horizontal axis represents a compression ratio (%) obtained by (initial thickness - thickness after compression) (mm)/initial thickness (mm) × 100 and the vertical axis represents the compression load (N/mm² = MPa). FIG. 5 expresses the schematic FS curve. As expressed in FIG. 5, the inclination of an approximation line A in the range of the compression ratio of 1 to 20% in the FS curve (horizontal axis: compression ratio, vertical axis: compression load) is the elastic modulus (MPa). As the numeral of the elastic modulus is smaller, the hardness is lower and the elastic deformation in the thickness direction X (arrangement direction X) occurs more easily.

In consideration of the range of the elastic modulus described above, the first part 210 is preferably formed of a polymer material. Examples of the polymer material include rubbers (thermosetting elastomers) such as silicone rubber, fluorine rubber, urethane rubber, natural rubber, styrene butadiene rubber, butyl rubber, ethylene propylene rubber (EPM, EPDM), butadiene rubber, isoprene rubber, and norbornene rubber. The first part 210 is preferably made of rubber. Among these, silicone rubber, fluorine rubber, and EPDM are preferable.

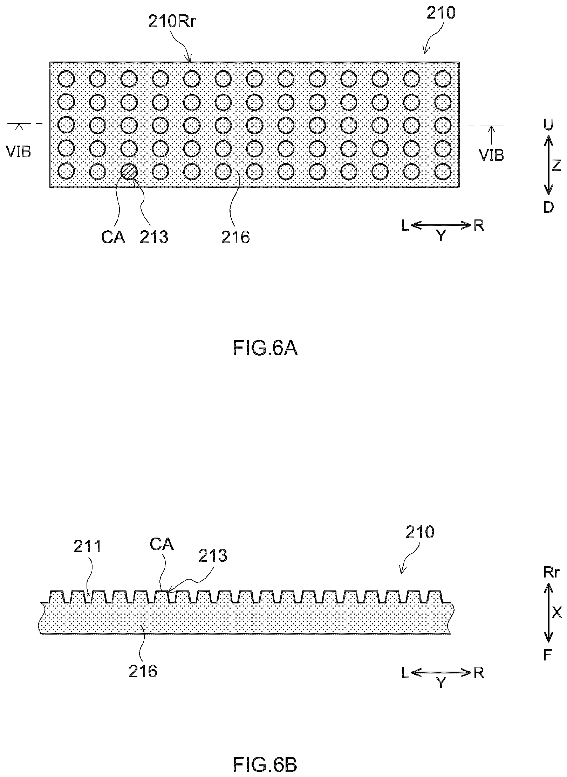

FIG. 6A and FIG. 6B are schematic views of the first part 210. FIG. 6A is a plan view of a rear surface 210Rr (first Y-Z plane) that is orthogonal to the thickness direction X (arrangement direction X) and FIG. 6B is a cross-sectional view in the thickness direction X. As illustrated in FIG. 6B, in the present embodiment, the first part 210 has a protrusion structure. The first part 210 includes a base part 216 with a flat plate shape, and the plurality of protrusion parts 213 projecting from the base part 216 to the arrangement direction X. By the first part 210 with the protrusion structure, it is easy to satisfy the aforementioned range of the elastic modulus and the elastic function can be achieved stably even after the charging and discharging cycle.

The base part 216 expands along a front surface (second Y-Z plane) of the first part 210 as can be seen from FIG. 6A and FIG. 6B. The base part 216 is a part that does not include a pore here. The base part 216 is a non-porous (solid structure) part. As illustrated in FIG. 6B, the base part 216 is provided on a surface (front surface in FIG. 6B) that faces the second part 220 here. In another embodiment, however, the base part 216 may be provided on a surface that faces the long side wall 12b of the rectangular secondary battery 100. The plurality of protrusion parts 213 project from the base part 216 along the thickness direction X (arrangement direction X). The provision of the base part 216 makes it easier to align with the second part 220 and can improve the productivity or workability when the spacer 200 is integrated. The thickness of the base part 216 (length in the arrangement direction X) is preferably 0.1 mm or more, and more preferably 0.3 mm or more. The thickness of the base part 216 is preferably 5 mm or less, and more preferably 2 mm or less.

The height (length in the up-down direction Z) and/or the width (length in the long side direction Y) of the base part 216 preferably coincides substantially with the height and/or the width of the long side wall 12b of the rectangular secondary battery 100. Thus, it becomes easier to align with the rectangular secondary battery 100 and the productivity or workability of the battery pack 500 can be improved.

The plurality of protrusion parts 213 are provided so as to be integrated with the base part 216. The plurality of protrusion parts 213 are the same in size, shape, and the like here. The protrusion parts 213 are regularly arranged on the Y-Z plane. On the Y-Z plane, a space 211 is secured between the protrusion parts 213. The protrusion part 213 extends from the base part 216 toward the long side wall 12b of the rectangular secondary battery 100 here. The outer shape of the protrusion part 213 is a truncated conical shape. The cross-sectional shape of the protrusion part 213 in the thickness direction X (arrangement direction X) is preferably a trapezoidal shape as illustrated in FIG. 6B. Thus, the collapse of the protrusion along with the charging and discharging cycle, which results in the decrease in elastic function, can be suppressed. Note that the protrusion part 213 is non-porous (a solid structure) here; however, a cavity (hollow) part may be provided internally.

As illustrated in FIG. 6B, the protrusion part 213 includes the contact region CA, which is in direct contact (contact) with the rectangular secondary battery 100, at an end part in the thickness direction X (arrangement direction X). As illustrated in FIG. 6A, the contact region CA of each protrusion part 213 has a circular shape in a plan view here. Although not limited in particular, in a case where the material of the first part 210 is EPDM or silicone rubber, the area S of the contact region CA of one protrusion part 213 is preferably 1.5 mm² or more and more preferably 3 mm² or more. In addition, the area S of the contact region CA of one protrusion part 213 is preferably 100 mm² or less. The total of the areas S (total area) of the plurality of protrusion parts 213 per unit area of the first part 210 (25 cm²) is preferably 1.2 to 18 cm²/25 cm² and more preferably 1.5 to 15 cm²/25 cm². When the area S is a predetermined value or more, the decrease in elastic function can be suppressed. When the area S is a predetermined value or less, the elastic modulus of the first part 210 can be adjusted to be in the aforementioned range easily. For example, the first part 210 may include a plurality of hollow parts extending along the arrangement direction X, which will also be described below in a second embodiment.

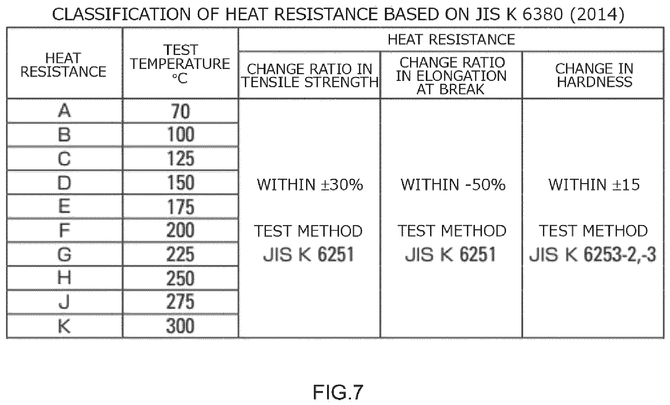

The first part 210 is a part with lower heat resistance than the second part 220. According to the classification of the heat resistance (see FIG. 7) based on JIS K 6380 (2014) of Japanese Industrial Standards (JIS), for example, the heat resistance of the first part 210 may correspond to E or less (that is, any one of A to E) and may be, for example, D or less (that is, any one of A to D). As expressed in FIG. 7, the heat resistance is classified into A to K in JIS K 6380 (2014). A corresponds to the lowest heat resistance and K corresponds to the highest heat resistance. In particular, when the first part 210 has the heat resistance corresponding to C or less (the upper limit of the test temperature is 125°C or less) or B or less (the upper limit of the test temperature is 100°C or less), it is preferable to provide the second part 220, in which case the effect of the art disclosed herein can be achieved at a high level.

The second part 220 exists between the first part 210 and the rectangular secondary battery 100 in the arrangement direction X. When the heat resistance of the first part 210 is low, even if the rectangular secondary battery 100 generates heat at the charging and discharging, for example, the provision of the second part 220 makes it difficult for the first part 210 to be influenced by the heat generation. Thus, the thermal deterioration of the first part 210 can be suppressed. Additionally, even if the temperature of the rectangular secondary battery 100 increases, the conduction of the heat to the adj acent rectangular secondary battery 100 can be suppressed.

As illustrated in FIG. 4, the second part 220 includes a porous part 222. Therefore, even when the rectangular secondary battery 100 expands and shrinks at the charging and discharging, the rectangular secondary battery 100 can be stably pressed with a predetermined restriction load and the load necessary to maintain the performance can be stably applied. The second part 220 here is formed of the porous part 222. However, the second part 220 may include a part other than the porous part 222 (for example, non-porous filling part).

The porous part 222 is a porous material (sponge shape) including a number of small holes that are arranged randomly. In this point, for example, the porous part 222 is different from a hole structure, which will be described below in the second embodiment, that is, a structure (for example, honeycomb structure) including a plurality of hollow parts arranged regularly along a predetermined direction. The porous part 222 preferably includes 100 or more holes with a diameter of 2 mm or less per unit volume (12,500 mm³), for example. The holes may be independent from each other completely, may communicate with each other partially, or may communicate with each other in a three-dimensional mesh shape, for example.

In the present embodiment, the porous part 222 mainly includes a material with predetermined heat resistance and elasticity. That is to say, the porous part 222 mainly includes a material that satisfies both: (1) the classification of the heat resistance based on JIS K 6380 (2014) (see FIG. 7) is E or more; and (2) the elastic modulus is 0.02 MPa or more and 0.9 MPa or less. Thus, by containing air internally, the second part 220 can have both the heat resistance and the swelling absorptive property. In the present specification, "mainly including the material" means that when the entire porous part 222 is 100 mass%, the material occupies 50 mass% or more, preferably 70 mass% or more, and more preferably 80 mass% or more. The material that satisfies the aforementioned (1) and (2) and occupies 50 mass% or more may be referred to as "main material" below.

As described above, the heat resistance is classified into A to K in JIS K 6380 (2014). A corresponds to the lowest heat resistance and K corresponds to the highest heat resistance. As expressed in FIG. 7, when the classification of the heat resistance is E or more, it means the following: when heat aging is performed continuously for 72 hours using a heat aging tester of a forcible circulation type (lateral wind method) in accordance with an accelerated aging testA method AA-2, the upper limit of the test temperature that satisfies the following regulations (a) to (c) is 175°C or more: (a) "change ratio in tensile strength" based on JIS K 6251 is within ±30%; (b) "change ratio in elongation at break" based on JIS K 6251 is within -50%; and (c) "change in hardness" based on JIS K 6253-2, 3 is within ±15. JIS stands for Japanese Industrial Standards.

By using the main material with the heat resistance in the classification E or more, the second part 220 can have a high heat insulation property and even when the rectangular secondary battery 100 has high capacity and a high heat generation property, for example, the heat conduction to the adjacent rectangular secondary battery 100 can be suppressed. Additionally, the rectangular secondary battery 100 is not easily burned down even when exposed to high temperature and thus, can keep its shape easily. Therefore, a series of heat generation of the rectangular secondary batteries 100 can be suppressed and the entire battery pack 500 can be prevented from having excessively high temperature. From the above viewpoint, the classification of the heat resistance is preferably F or more (the upper limit of the test temperature is 200°C or more) and more preferably G or more (the upper limit of the test temperature is 225°C or more). The alphabet representing the classification of the heat resistance of the main material is preferably after that of the heat resistance of the first part 210 (close to K) in the alphabetical order.

If the elastic modulus of the main material satisfies the aforementioned range, even when the rectangular secondary battery 100 with high capacity swells easily, the swelling can be suitably absorbed and the increase in interelectrode distance between the positive and negative electrodes of the rectangular secondary battery 100, which results in the deterioration in performance (for example, Li precipitation), can be suppressed. From the above viewpoint, the elastic modulus of the main material is preferably 0.5 MPa or less, more preferably 0.3 MPa or less, and particularly preferably 0.2 MPa or less. The elastic modulus of the main material is preferably lower than that of the first part 210. In other words, it is preferable that the main material (or the porous part 222 including the main material) be softer than the first part 210 and be easily elastically deformable in the thickness direction X. The elastic modulus of the main material can be adjusted by, for example, the material, the structure, porosity, or the like, which will be described below.

When the thickness of the main material that is placed at rest for two hours after the aforementioned compression test for obtaining the elastic modulus is measured with the micrometer, the thickness of the main material after being placed at rest for two hours is more preferably within -20% of the initial thickness. Thus, in the case where the rectangular secondary battery 100 repeats the shrinkage and expansion with the charging and discharging cycle, the second part 220 is restored to the original shape easily. Moreover, the swelling of the rectangular secondary battery 100 can be absorbed easily.

The main material is preferably made of a material whose shape is kept even after heating at 800°C or more. The main material is preferably rubber such as silicon rubber or fluorine rubber. In particular, silicone rubber is preferable. The porous part 222 (which is the same as the second part 220 here) is preferably made of rubber. The porous part 222 preferably contains silicone rubber. Silicone rubber preferably occupies 50 mass% or more, more preferably 70 mass% or more, and still more preferably 80 mass% or more of the whole porous part 222, and it is particularly preferable that the porous part 222 be formed of silicone rubber (silicone rubber occupy 95 mass% or more). The porous part 222 may include another resin material (the polymer material given as examples of the constituent material of the first part 210), inorganic filler (for example, ceramic such as alumina), various kinds of additives, or the like.

The porous part 222 may be a commercial product that is purchased, or may be manufactured by a conventionally known method. Silicone rubber foam (silicone sponge) can be manufactured in a manner that, for example, a silicone material with a chemical foaming agent diffused therein is heated so that the chemical foaming agent is decomposed by heat, and with gas generated at the decomposition, holes (continuous foams) communicating with each other in a three-dimensional mesh shape are formed.

The porosity of the porous part 222 is preferably 20 vol% or more, more preferably 25 vol% or more, and particularly preferably 50 vol% or more. Thus, the swelling absorptive property of the spacer 200 can be improved. From the viewpoint of the durability, the porosity of the porous part 222 may be 95 vol% or less, and 90 vol% or less. Note that the term "porosity" in the present specification refers to the value obtained by dividing the total pore volume (cm³) based on the measurement with a mercury porosimeter by the apparent volume (cm³) and then multiplying the quotient by 100.

In a preferred aspect, for example, when the spacer 200 is assembled to the battery pack 500 and compressed, a part of the first part 210 is disposed in the second part 220. In one example, the first part 210 includes one or a plurality of convex parts, the second part 220 has a concave part corresponding to such a convex part, and the convex part of the first part 210 is disposed in the concave part of the second part 220. More specifically, for example, a part of the protrusion parts 213 of the first part 210 (part near the second part 220) exists inside the second part 220. In another example, on the contrary, the second part 220 includes one or a plurality of convex parts, the first part 210 has a concave part corresponding to such a convex part, and the convex part of the second part 220 is disposed in the concave part of the first part 210. More specifically, for example, the convex part of the second part 220 is stuck between the protrusion parts 213 (stuck in a part corresponding to the space 211) of the first part 210. Thus, the integrity between the first part 210 and the second part 220 can be improved and the deviation in stacking can be prevented. In addition, as the first part 210 and the second part 220 overlap partially in the thickness direction X, the spacer 200 can be thinned and the volume energy density of the battery pack 500 can be improved.

The battery pack 500 can be used for various applications, but can be suitably used in an application in which the high capacity is needed in particular, for example, as a motive power source for a motor (power source for driving) that is mounted in a vehicle such as a passenger car or a truck. The vehicle is not limited to a particular type, and may be, for example, a plug-in hybrid electric vehicle (PBEV), a hybrid electric vehicle (HEV), or a battery electric vehicle (BEV).

### <Second embodiment>

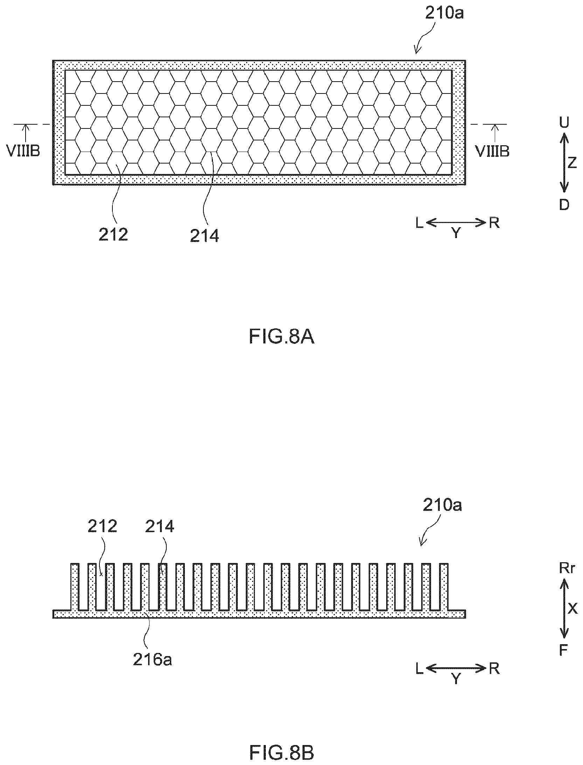

FIG. 8A and FIG. 8B are schematic views of a first part 210a. FIG. 8A is a plan view of a surface (first Y-Z plane) that is orthogonal to the thickness direction X (arrangement direction X) and FIG. 8B is a longitudinal cross-sectional view taken along line VIIIB-VIIIB in FIG. 8A. A second embodiment is similar to the first embodiment described above except that the spacer includes the first part 210a instead of the first part 210. The outer shape of the first part 210a is a flat plate similarly to the first part 210 in the first embodiment. As illustrated in FIG. 8A, the first part 210a in this embodiment has a hole structure. By the first part 210a with the hole structure, it is easy to satisfy the aforementioned range of the elastic modulus and the elastic function can be achieved stably even after the charging and discharging cycle. A plurality of hollow parts 212 extend along the thickness direction X (arrangement direction X); thus, the structure can be stably maintained and the decrease in elastic function can be suppressed relatively compared to a case where, for example, the plurality of hollow parts 212 extend perpendicular to the arrangement direction X.

The first part 210a includes partition walls (ribs) 214 extending along the thickness direction X (arrangement direction X), and the plurality of hollow parts 212 sectioned by the partition walls 214 and arranged regularly in the thickness direction X (arrangement direction X). The first part 210a further includes a base part 216a here. The property and the like of the base part 216a may be similar to those of the base part 216 in the first embodiment. However, the base part 216a is not essential and may be omitted in another embodiment.

The partition walls 214 form the frame of the first part 210a. As illustrated in FIG. 8A, the partition walls 214 are regularly provided on a rear surface (first Y-Z plane). The partition walls 214 extend along the thickness direction X (arrangement direction X) (from a front side to a depth side in FIG. 8A). The partition walls 214 section between the plurality of hollow parts 212.

The plurality of hollow parts 212 are sectioned by the partition walls 214, and are arranged regularly along the thickness direction X (arrangement direction X). The plurality of hollow parts 212 are independent from each other here. In these points, the hollow parts 212 are different from a porous material (sponge shape) with pores communicating in a three-dimensional mesh shape. Although not limited in particular, the size (volume) of one hollow part 212 may be 1 mm³ or more. The hollow part 212 has a hexagonal shape in the Y-Z plan view here. That is to say, the hollow part 212 has a hexagonal columnar shape along the thickness direction X.

As illustrated in FIG. 8B, one end part (front end part in FIG. 8B) of the hollow part 212 in the thickness direction X (arrangement direction X) is closed here. A surface of the hollow part 212 on the side that faces the second part 220 is closed by the base part 216a here. The thickness of the base part 216a (length in the arrangement direction X) may not be uniform in the Y-Z plane and a thick or thin part may exist in a part. The area of the Y-Z plane of the base part 216a may be more than or equal to the area of the Y-Z plane where the partition walls 214 exist.

The first part 210a has a comb-like shape in a cross-sectional view in the thickness direction X. By closing one end part of the hollow part 212 in this manner, integration with the second part 220 becomes easy and the workability can be improved. On the other hand, as illustrated in FIG. 8A, the other end part (rear end part) of the hollow part 212 in the thickness direction X (arrangement direction X) is open. Here, the surface on the side that faces the long side wall 12b of the rectangular secondary battery 100 is open. The first part 210a has a non-penetration hole structure. However, regardless of whether the base part 216a is included or not, the hollow part 212 may be a penetration hole that has both end parts in the thickness direction X (arrangement direction X) open (opening). The hollow part 212 may be a polygonal columnar penetration hole structure (more specifically, hexagonal columnar penetration hole structure) or a circular penetration hole structure. In the present specification, the term "hole structure" refers to a general structure including the plurality of hollow parts 212 arranged regularly along the thickness direction X (arrangement direction X).

The first part 210a has a honeycomb structure here. Thus, the hollow parts 212 can be maintained easily even when the charging and discharging cycle is repeated, and the elastic function can be achieved stably even after the charging and discharging cycle. In the present specification, the term "honeycomb structure" refers to a structure included in "hole structure" and refers to the general three-dimensional space filling with stereoscopic figures arranged without a space therebetween, without being limited to the case in which the shape of the hollow part 212 is hexagonal in the Y-Z plan view.

The ratio of the total area of the plurality of hollow parts 212 to the entire area of the first part 210a in the surface (Y-Z plane) that is orthogonal to the thickness direction X (arrangement direction X) is preferably 0.25 or more, and more preferably 0.35 to 0.8. By setting the ratio to be a predetermined value or more, when the rectangular secondary battery 100 swells, the spacer 200 is crushed easily to absorb the swelling of the rectangular secondary battery 100 easily. When the ratio is a predetermined value or less, the hollow parts 212 can be maintained stably and the durability of the first part 210 can be improved.

Note that in the present embodiment, "the total of the areas S (total area) of the plurality of protrusion parts 213" can be read as "the total area S of the contact regions of the entire partition walls 214".

Several Examples relating to the present disclosure will be explained below, but the disclosure is not meant to be limited to these Examples.

### <Battery pack manufacture 1>

First, a plurality of lithium ion secondary batteries were prepared. Next, spacers including first parts and second parts (Examples 1 to 7 and Comparative Examples 1 to 3) and a spacer including only a second part (Comparative Example 4) were prepared. Note that in Examples 1 to 7 and Comparative Examples 1 to 3, when the thickness of the lithium ion secondary battery was 1, the thickness of each of the first part and the second part was 0.075 times that of the lithium ion secondary battery (7.5% of the thickness of the lithium ion secondary battery).

Each of the first parts of the spacers in Examples 1 to 7 and Comparative Examples 1 to 3 includes a material shown in Table 1, and has a shape shown in Table 1. Each of the first parts of the spacers in Examples 1 to 7 and Comparative Examples 1 to 3 has the elastic modulus shown in Table 1. For example, each of the first parts of the spacers in Examples 1 to 5, and 7 and Comparative Examples 1 to 3 has the protrusion structure including the base part formed of EPDM and having a flat plate shape and a non-porous (solid) structure, and the plurality of protrusion parts extending from the base part to the thickness direction. The first part of the spacer in Example 6 has the honeycomb structure including the partition walls formed of silicone rubber and extending along the thickness direction, and the plurality of hollow parts sectioned by the partition walls and arranged regularly in the thickness direction.

Each of the second parts of the spacers in Examples 1 to 7 and Comparative Examples 1 to 4 includes a material shown in Table 1. Each of the second parts of the spacers in Examples 1 to 7 and Comparative Examples 1 to 4 is formed of a material having the porosity, the classification of the heat resistance, and the elastic modulus shown in Table 1. Each of the second parts of the spacers in Examples 1 to 7 and Comparative Examples 2 and 4 is made of a porous part. Each of the second parts of the spacers in Examples 1 to 6 and Comparative Example 4 is formed of porous silicone foam with a flat plate shape. The second part of the spacer in Comparative Example 1 is formed of non-porous (solid-structure) silicone rubber with a flat plate shape.

### <Battery pack manufacture 2>

Next, the lithium ion secondary battery and the spacer were held between a pair of restriction jigs in the arrangement direction and restricted so that the thickness of the spacer became 80% of that before the restriction; thus, test batteries were manufactured. Then, the distance between the pair of restriction jigs (initial thickness) was measured.

### <Cycle test>

Under an environment with a temperature of 40°C, the state of charge (SOC) of the secondary battery was adjusted to 15%, constant-current constant-voltage charging was performed at a charging rate of 0.2 C until the SOC became 95%. Then, after 5-minute rest, constant-current constant-voltage discharging was performed at a discharging rate of 0.5 C until the SOC became 15%, which was followed by 90-minute rest. These charging and discharging are regarded as one cycle, and 200 cycles were performed.

### <Evaluation on change in thickness of battery pack>

After the cycle test, the distance between the pair of restriction jigs (thickness after cycles) was measured again and compared with the initial thickness. The results are shown in Table 1. In Table 1, a double-circular mark expresses a case in which the thickness after the cycles is 1.03 times or less the initial thickness, a single-circular mark expresses a case in which the thickness after the cycles is more than 1.03 times and 1.05 times or less the initial thickness, and a cross mark expresses a case in which the thickness after the cycles is more than 1.05 times the initial thickness. The numeral closer to 1 indicates that the swelling of the test battery including the spacer was suppressed.

### <Determination of presence or absence of Li precipitation>

The lithium ion secondary battery after the cycle test was disassembled and for the separator and the negative electrode of the electrode body, whether Li precipitation occurred or not was determined with eyes. The results are shown in Table 1.

### <Determination of resistance against spreading fire>

In the battery pack, the lithium ion secondary battery existing at a center in the arrangement direction was subjected to forcible thermal runaway by local heating, and the time before burning of the adjacent lithium ion secondary battery due to spreading fire was measured. The results are shown in Table 1. In Table 1, a single-circular mark expresses a case in which burning due to spreading fire did not occur for 20 minutes or longer (specifically, neither smoke nor fire was recognized) and a cross mark expresses a case in which burning due to spreading fire occurred in less than 20 minutes (specifically, smoke and/or fire was recognized).

### [Table 1]

**Table 1**

| | First part | | | | Porous part of second part | | | | After cycle test | | Resistance against spreading fire |
|---|---|---|---|---|---|---|---|---|---|---|---|
| | Material | Shape | Classification of heat resistance* | Elastic modulus | Material | Porosity | Classification of heat resistance* | Elastic modulus | Change in thickness | Li precipitation | |
| Example 1 | EPDM | Protrusion structure | B | 1 MPa | Silicone rubber | >50 vol% | G | 0.02 MPa | ⊚ | ○ | ○ |
| Example 2 | EPDM | Protrusion structure | B | 1 MPa | Silicone rubber | >50 vol% | G | 0.2 MPa | ⊚ | ○ | ○ |
| Example 3 | EPDM | Protrusion structure | B | 1 MPa | Silicone rubber | >25 vol% | G | 0.9 MPa | ○ | ○ | ○ |
| Example 4 | EPDM | Protrusion structure | B | 7 MPa | Silicone rubber | >50 vol% | G | 0.2 MPa | ⊚ | ○ | ○ |
| Example 5 | EPDM | Protrusion structure | B | 10 MPa | Silicone rubber | >25 vol% | G | 0.9 MPa | ○ | ○ | ○ |
| Example 6 | Silicone rubber | Honeycomb structure | G | 3.3 MPa | Silicone rubber | >50 vol% | G | 0.2 MPa | ⊚ | ○ | ○ |
| Example 7 | EPDM | Protrusion structure | B | 10 MPa | Urethane/silicone rubber mixture | >25 vol% | E | 0.9 MPa | ○ | ○ | ○ |
| Comparative Example 1 | EPDM | Protrusion structure | B | 10 MPa | Silicone rubber | - Solid | G | 0.9 MPa | ○ | ○ | × |
| Comparative Example 2 | EPDM | Protrusion structure | B | 10 MPa | Urethane rubber | >25 vol% | B | 0.9 MPa | ○ | ○ | × |
| Comparative Example 3 | EPDM | Protrusion structure | B | 10 MPa | Ceramics | - | G | 15 MPa | × | ○ | ○ |
| Comparative Example 4 | - | | | | Silicone rubber | >25 vol% | G | 0.9 MPa | × | × | ○ |

| | | | | | | | | | | | |
|---|---|---|---|---|---|---|---|---|---|---|---|
| *Classification of heat resistance (A-K) based on JIS K 6380 | | | | | | | | | | | |

As shown in Table 1, the thickness after the cycles was relatively large in Comparative Examples 3 and 4. It is considered that this is because the second part of the spacer had an elastic modulus of 15 MPa, which is high, so that the swelling of the secondary battery was not able to be absorbed in Comparative Example 3. In Comparative Example 4, moreover, it is considered that the spacer did not include the first part with the predetermined elastic modulus, so that the swelling of the secondary battery was not able to be absorbed.

Additionally, as shown in Table 1, in Comparative Example 4, the Li precipitation was observed after the cycle test. It is considered that this is because the spacer did not include the first part with the predetermined elastic modulus, so that the load on the secondary battery was insufficient and the interelectrode distance between the positive and negative electrodes increased, resulting in the inhomogeneous charging and discharging reaction.

As shown in Table 1, the resistance against spreading fire was relatively low in Comparative Examples 1 and 2. The following reasons are considered: in Comparative Example 1, the second part of the spacer was not porous and therefore, the heat easily conducted to the adjacent secondary battery; and in Comparative Example 2, the classification of the heat resistance in the second part of the spacer was B and the heat resistance was not enough, and therefore the heat easily conducted to the adjacent secondary battery.

In contrast to these comparative examples, the thickness after the cycles was suppressed to be small relatively and the Li precipitation was not observed in Examples 1 to 7. Additionally, the resistance against spreading fire was relatively high. The reason is considered as follows: the first part of the spacer had the predetermined elastic modulus, the second part thereof included the porous part, and the porous part was formed of the material satisfying the predetermined elastic modulus and classification of the heat resistance; thus, the spacer was able to have the heat resistance and the swelling absorptive property. It is considered that, specifically, compared to a case in which the second part does not include the porous part or a case in which the porous part does not satisfy the aforementioned classification of the heat resistance, the heat conduction to the adjacent secondary battery was able to be suppressed relatively, and moreover, compared to a case in which the second part does not satisfy the elastic modulus, the swelling of the secondary battery was able to be suitably absorbed relatively after the charging and discharging cycle. These results indicate the significance of the art disclosed herein.

Although the preferable embodiments of the present disclosure have been described above, they are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed. For example, a part of the aforementioned embodiment can be replaced by the following modification, and another modification can be added to the aforementioned embodiment. Additionally, the technical feature may be deleted as appropriate unless such a feature is described as an essential element.
(1) For example, in the aforementioned first and second embodiments, the outer shape of each of the first part 210 and the second part 220 is a flat plate shape and the surface thereof (Y-Z plane) orthogonal to the thickness direction X (arrangement direction X) has approximately the same area. However, the present disclosure is not limited to this example. The first part 210 and the second part 220 may be different in area of the Y-Z plane. In a modification, the area of the Y-Z plane of the first part 210 is preferably less than the area of the Y-Z plane of the second part 220. When the area of the second part 220 is large, the influence from the heat generation of the rectangular secondary battery 100 can be reduced further and the thermal deterioration of the first part 210 can be suppressed at the high level.
(2) For example, in the first embodiment described above, the first part 210 has the protrusion structure. The outer shape of each of the plurality of protrusion parts 213 is a truncated conical shape, and the contact region CA of each protrusion part 213 has a circular shape in a plan view. However, the present disclosure is not limited to this example. The outer shape of the protrusion part 213 may be a cylindrical shape, a polygonal columnar shape (such as a triangular columnar shape or a quadrangular columnar shape), or the like. The contact region CA may have a circular shape, a polygonal shape (such as a triangular shape or a quadrangular shape), or the like in a plan view.
(3) For example, in the aforementioned second embodiment, the plurality of hollow parts 212 of the first part 210a are independent from each other. However, the present disclosure is not limited to this example. The plurality of hollow parts 212 may communicate with each other through a hole part penetrating the partition wall 214. In other words, the first part 210a may have a hole part that communicates between the plurality of hollow parts 212. In such an aspect, the air can enter and exit the plurality of hollow parts 212 smoothly, making it possible to suppress the decrease in elastic function due to a so-called sucking effect.
(4) For example, in the aforementioned second embodiment, the first part 210a has the honeycomb structure and the plurality of hollow parts 212 included in the first part 210a have the hexagonal shape in the Y-Z plan view. However, the present disclosure is not limited to this example. The hollow parts 212 do not need to have the honeycomb structure. The hollow parts 212 may be arranged randomly. The shape of the hollow part 212 in the Y-Z plan view may be other than the hexagonal shape, for example, a circular shape, a triangular shape, a quadrangular shape, or the like. The hollow part 212 may be sectioned in the middle of the space in the thickness direction X (arrangement direction X).

As described above, the following items are given as specific aspects of the art disclosed herein.
Item 1: The battery pack including: the plurality of rectangular secondary batteries that are disposed along the predetermined arrangement direction; and the spacer that is disposed between the rectangular secondary batteries that are adjacent in the arrangement direction, in which the spacer includes the first part and the second part that are stacked in the arrangement direction, the first part has an elastic modulus of 1 MPa or more and 10 MPa or less, the second part includes the porous part, 50 mass% or more of the entire porous part is occupied by the material that satisfies both the following conditions: (1) the classification of the heat resistance based on JIS K 6380 (2014) is E or more; and (2) the elastic modulus is 0.02 MPa or more and 0.9 MPa or less, and the elastic modulus is the value obtained as the inclination of the approximation line in the range of the compression ratio from 1 to 20% from the compression load-compression ratio curve (horizontal axis: compression ratio, vertical axis: compression load) formed by performing the compression until the compression load becomes 3.9 MPa in the arrangement direction at a compression speed of 12 kPa/min. Item 2: The battery pack according to Item 1, in which silicone rubber occupies 50 mass% or more of the entire porous part.
Item 3: The battery pack according to Item 1 or 2, in which the elastic modulus of the material forming the porous part is 0.02 MPa or more and 0.2 MPa or less.
Item 4: The battery pack according to any one of Items 1 to 3, in which the porous part has a porosity of 25 vol% or more.
Item 5: The battery pack according to any one of Items 1 to 4, in which the porous part has a porosity of 50 vol% or more.
Item 6: The battery pack according to any one of Items 1 to 5, in which the area of the surface of the first part that is orthogonal to the arrangement direction is less than or equal to the area of the surface of the second part that is orthogonal to the arrangement direction.
Item 7: The battery pack according to any one of Items 1 to 6, in which a part of the first part is disposed in the second part.
Item 8: The battery pack according to any one of Items 1 to 7, in which the first part and the second part are integrated by a binding member.

### [Reference Signs List]

10 Battery case
20 Electrode body
100 Rectangular secondary battery
200 Spacer
210, 210a First part
212 Hollow part
213 Protrusion part
214 Partition wall
216, 216a Base part
220 Second part
300 Restriction mechanism
500 Battery pack

## Claims

1. A battery pack (500) comprising:
a plurality of rectangular secondary batteries (100) that are disposed along a predetermined arrangement direction (X); and
a spacer (200) that is disposed between the rectangular secondary batteries (100) that are adjacent in the arrangement direction (X), wherein
the spacer (200) includes a first part (210) and a second part (220) that are stacked in the arrangement direction (X),
the first part (210) has an elastic modulus of 1 MPa or more and 10 MPa or less,
the second part (220) includes a porous part (222),
50 mass% or more of the entire porous part (222) is occupied by a material that satisfies both the following conditions:
(1) a classification of heat resistance based on JIS K 6380 (2014) is E or more; and
(2) the elastic modulus is 0.02 MPa or more and 0.9 MPa or less, and
the elastic modulus is a value obtained as an inclination of an approximation line in a range of a compression ratio from 1 to 20% from a compression load-compression ratio curve (horizontal axis: compression ratio, vertical axis: compression load) formed by performing compression until a compression load becomes 3.9 MPa in the arrangement direction (X) at a compression speed of 12 kPa/min.

2. The battery pack (500) according to claim 1, wherein silicone rubber occupies 50 mass% or more of the entire porous part (222).

3. The battery pack (500) according to claim 1 or 2, wherein the elastic modulus of the material forming the porous part (222) is 0.02 MPa or more and 0.2 MPa or less.

4. The battery pack (500) according to any one of claims 1 to 3, wherein the porous part (222) has a porosity of 25 vol% or more.

5. The battery pack (500) according to any one of claims 1 to 4, wherein the porous part (222) has a porosity of 50 vol% or more.

6. The battery pack (500) according to any one of claims 1 to 5, wherein an area of a surface of the first part (210) that is orthogonal to the arrangement direction (X) is less than or equal to an area of a surface of the second part (220) that is orthogonal to the arrangement direction (X).

7. The battery pack (500) according to any one of claims 1 to 6, wherein a part of the first part (210) is disposed in the second part (220).

8. The battery pack (500) according to any one of claims 1 to 7, wherein the first part (210) and the second part (220) are integrated by a binding member.
